# EUROPÄISCHE PATENTSCHRIFT

(11) **EP 3 422 806 B1**
(45) Veröffentlichungstag und Bekanntmachung des Hinweises auf die Patenterteilung: **05.05.2021**
(21) Anmeldenummer: 18179203.7
(22) Anmeldetag: 22.06.2018
(51) Int. Cl.: H05B 3/26, H01C 17/24, H01C 17/242

(54) **VERFAHREN ZUM BEARBEITEN EINES ELEKTRISCHEN BAUTEILS MIT SCHICHTAUFBAU**
METHOD FOR PROCESSING AN ELECTRIC COMPONENT HAVING A LAYERED STRUCTURE
PROCÉDÉ DE TRAITEMENT D'UN COMPOSANT ÉLECTRIQUE À STRUCTURE EN COUCHE

(30) Priorität: 30.06.2017 DE 102017211123
(43) Veröffentlichungstag der Anmeldung: 02.01.2019
(73) Patentinhaber: E.G.O. Elektro-Gerätebau GmbH, 75038 Oberderdingen (DE)
(72) Erfinder: Hauk, Thomas, 75015 Bretten (DE); Reiner, Thorsten, 75038 Oberderdingen (DE)
(74) Vertreter: Patentanwälte Ruff, Wilhelm, Beier, Dauster & Partner mbB

(56) Entgegenhaltungen:
- EP-A1- 0 484 852
- WO-A1-2016/009345
- JP-A- 2002 141 159
- JP-A- 2002 246 155

## Beschreibung

### ANWENDUNGSGEBIET UND STAND DER TECHNIK

Die Erfindung betrifft ein Verfahren zum Bearbeiten eines elektrischen Bauteils mit einem Schichtaufbau. Bei dem Bauteil ist dann insbesondere der genannte Schichtaufbau, der mindestens eine Funktionsschicht aufweist, zumindest teilweise durchtrennt.

Aus dem Stand der Technik sind elektrische Bauteile mit Schichtaufbau bekannt, beispielsweise sogenannte Dickschicht-Heizelemente. Zum Abgleichen auf einen speziellen elektrischen Widerstandswert als Bearbeiten können Durchtrennungen bzw. Schnitte in den Schichtaufbau eingebracht werden, so dass ein elektrischer Widerstand auf einen genau gewünschten Bereich exakt eingestellt werden kann.

Aus der DE 102016211081 A1 ist es bekannt, zum elektrischen Abgleich eines Dickschicht-Heizelements als Bearbeiten extra vorgesehene Bereiche sozusagen abzutrennen bzw. durchzutrennen. Dabei sollen vor allem elektrische Anschlüsse, die aus entsprechend gut leitfähigem Material bestehen, durchgetrennt werden.

Aus der JP 2002-246155 A ist es bekannt, bei einem keramischen Heizer einen elektrischen Widerstandswert schnell und effizient einzustellen bzw. zu justieren. Dazu ist eine CCD-Kamera vorgesehen, um das Widerstandsmaterial zu durchtrennen oder zu entfernen. Dabei kann gleichzeitig der elektrische Widerstand gemessen werden. Mittels der CCD-Kamera kann die x-y-Position des Heizers bestimmt werden, so dass der Laser positionsgenau arbeiten kann. Zusätzlich kann die CCD-Kamera die Entfernung eines beliebigen Punkts zu einem Mittelpunkt der Fläche des keramischen Heizers erkennen, ebenso einen Bogenwinkel ausgerichtet an diesem Mittelpunkt. Der Laserstrahl wird dabei auf an sich bekannte Art und Weise mit einem bewegbaren Spiegel gelenkt, so dass der Laser an sich sowie auch der keramische Heizer nicht bewegt werden müssen.

Aus der JP 2002-141159 A ist ein im Prinzip gleiches Verfahren bekannt. Hier ist eine etwas andere Ausgestaltung der Heizelemente vorgesehen. Die Daten zur Position des Heizers sowie zu seiner Dicke sind als gegeben vorausgesetzt.

### AUFGABE UND LÖSUNG

Der Erfindung liegt die Aufgabe zugrunde, ein eingangs genanntes Verfahren zum Bearbeiten eines elektrischen Bauteils mit einem Schichtaufbau zu schaffen, mit dem Probleme des Standes der Technik gelöst werden können und es insbesondere möglich ist, ein solches Bauteil bzw. dessen Schichtaufbau möglichst gut entsprechend einer Vorgabe bearbeiten zu können bzw. den Schichtaufbau durchtrennen zu können.

Gelöst wird diese Aufgabe durch ein Verfahren mit den Merkmalen des Anspruchs 1. Vorteilhafte sowie bevorzugte Ausgestaltungen der Erfindung sind Gegenstand der weiteren Ansprüche und werden im Folgenden näher erläutert.

Es ist vorgesehen, dass das Bauteil einen Träger mit mindestens einer Funktionsschicht darauf aufweist. Diese Funktionsschicht soll mittels eines Trenn-Lasers vollständig durchtrennt werden. Eine solche Funktionsschicht kann zwar grundsätzlich beliebiger Natur sein, insbesondere ist sie aber eine Heizleiterschicht bzw. ein Heizelement, wenn das Bauteil eine Heizeinrichtung ist. Bei dem Verfahren wird als erster Schritt an der Stelle, an der die Durchtrennung der Funktionsschicht erfolgen soll, ein Höhenprofil der Funktionsschicht über der Ebene oder Oberseite des Trägers erstellt. Vorteilhaft erfolgt die Erstellung des Höhenprofils genau entlang der späteren Durchtrennung der Funktionsschicht. Das Höhenprofil sollte über derjenigen Ebene des Trägers erstellt werden, die die Oberfläche des Trägers darstellt. Weist der Träger, der beispielsweise aus Metall besteht, noch eine oder mehrere Schichten auf seiner Oberseite auf, insbesondere Isolierschichten bzw. Dielektrikumsschichten, so kann das Höhenprofil diese mindestens eine Schicht mit einbeziehen oder außer Acht lassen. Dies kann für das jeweilige Verfahren spezifiziert werden. Hierzu wird nachfolgend noch mehr ausgeführt.

In einem weiteren Schritt wird die Information des erstellten Höhenprofils der Funktionsschicht an einen Trenn-Laser bzw. an dessen Steuerung gegeben. Dieser Trenn-Laser wird unter Verwendung von bekannten Schichtparametern der Funktionsschicht, die nachfolgend noch näher erläutert werden, so eingestellt, dass er dem Höhenprofil angepasst die Funktionsschicht vollständig durchtrennt, aber nach Möglichkeit nicht ungewünscht viel mehr Material. Es ist zwingend für die Erfindung, dass die Funktionsschicht vollständig durchtrennt wird. Wie nachfolgend noch näher erläutert werden wird, kann eine unter der Funktionsschicht liegende Schicht, sei es die Oberfläche des Trägers oder mindestens eine Isolierschicht, dabei verschont werden bzw. nicht betroffen sein, alternativ kann sie auch noch zumindest teilweise durchtrennt werden. Dies kann für das Verfahren einzeln spezifiziert werden, je nach Vorgabe.

Durch das Erfassen des Höhenprofils der Funktionsschicht, insbesondere also des Höhenverlaufs der Oberfläche der Funktionsschicht, können Variationen von deren Dicke und somit von deren Höhe erfasst und sozusagen ausgeglichen werden. So kann eben erreicht werden, dass eine Durchtrennung der Funktionsschicht vollständig erfolgt. In vielen Fällen kann es aber gefährlich bzw. nachteilig sein, wenn der Trenn-Laser tiefer als die Funktionsschicht arbeitet und insbesondere eine oder mehrere Isolierschichten bzw. Dielektrikumsschichten auf einem metallischen Träger des Bauteils beschießt und dabei zwangsläufig beeinträchtigt bzw. beschädigt. Die daraus resultierende mögliche Beeinträchtigung der elektrischen Isoliereigenschaften kann bewirken, dass eine Hochspannungsprüfung nicht mehr bestanden wird. So kann beispielsweise anhand der Information des Höhenprofils eingestellt werden, dass die Funktionsschicht vollständig durchtrennt wird und die oberste von mehreren Isolierschichten darunter etwas beschädigt wird, aber nur soweit, dass sich hier mit Sicherheit keinerlei Material der Funktionsschicht mehr befindet. Dieses Material könnte nämlich noch signifikant elektrisch leitfähig sein und dann wiederum bewirken, dass im Ergebnis die Funktionsschicht doch nicht vollständig durchtrennt ist. Das Vorsehen der mehreren Isolier- bzw. Dielektrikumsschichten kann hier bewirken, dass eine sozusagen beschädigt werden kann, die gewünschten Isoliereigenschaften dabei jedoch von den anderen Isolierschichten, die nicht beeinträchtigt oder beschädigt werden, ausreichend aufrechterhalten werden.

In Ausgestaltung der Erfindung kann zuvor gewählt werden, ob der Trenn-Laser nur die Funktionsschicht durchtrennt und keine darunterliegende Schicht, insbesondere weder darunterliegende Isolierschichten noch sonstige Schutzschichten für einen Träger oder den Träger selbst bzw. dessen Trägermaterial beschädigen. Alternativ dazu kann eingestellt werden, dass der Trenn-Laser etwas tiefer als nur die Funktionsschicht durchtrennt, also sozusagen in die darunterliegende Materialschicht schneidet. Er kann beispielsweise zusätzlich 1 µm bis 100 µm tiefer durchtrennen, besonders bevorzugt 5 µm bis 20 µm. Je nach Art und Aufbau des Bauteils mit Funktionsschicht, Träger und eventuellen Schutzschichten oder Isolierschichten dazwischen kann eine dieser beiden Möglichkeiten besonders vorteilhaft sein für eine vollständige Durchtrennung der Funktionsschicht bei gleichzeitiger Sicherstellung der Funktion des Bauteils.

Für die Erstellung des Höhenprofils der Funktionsschicht über der Ebene des Trägers gibt es grundsätzlich mehrere Möglichkeiten. Die genannte Ebene des Trägers kann dabei eine sogenannte Null-Ebene sein, über die hinaus dann das Höhenprofil erstellt wird. Möglich sind zwar auch Anordnungen mit Abtastnadeln odgl.. Vorteilhaft wird hierfür ein Mess-Laser verwendet, der das Höhenprofil sozusagen abtastet. Die vorbeschriebene Erstellung des Höhenprofils sollte möglichst exakt dort vorgenommen werden, wo später die Funktionsschicht durchtrennt wird. Vorteilhaft erfolgt dies entlang einer Linie oder entlang von mehreren Linien, insbesondere auch Teil-Geraden.

Das Höhenprofil kann vorteilhaft als Weg-Höhe-Diagramm aufgenommen werden. Die Genauigkeit der Höhe sollte dabei gewählt werden abhängig davon, ob wirklich nur genau die Funktionsschicht durchtrennt werden soll oder ob etwas tiefer durchtrennt werden soll, sie sollte aber im µm-Bereich liegen. Die Auflösung entlang des Weges kann etwas grober sein, da üblicherweise keine sprungartige Variation der Höhe der Funktionsschicht zu erwarten ist. Lediglich an Schichtübergängen bzw. am Beginn oder am Ende einer Schicht können derartige Sprünge auftauchen. Somit kann auch entlang des Weges eine Auflösung im µm-Bereich liegen, allerdings möglicherweise um eine Größenordnung größer als in der Höhe, was vor allem bei einer Erfassung mittels eines Mess-Lasers gut möglich ist.

In einer vorteilhaften Ausgestaltung der Erfindung ist es möglich, dass das Höhenprofil entlang einer späteren Trennlinie bzw. Durchtrennung durch die Funktionsschicht zuerst vollständig aufgenommen wird, bevor mit dem Durchtrennen der Funktionsschicht begonnen wird. Dann kann dieses Verfahren möglichst ohne Beeinträchtigung und sehr genau erfolgen. Alternativ kann das Höhenprofil sozusagen etwas vor dem Trenn-Laser vorlaufend aufgenommen werden, so dass dieser mit einem relativ geringen Abstand, beispielsweise 5 mm bis 10 mm, nachläuft. Dieses Verfahren bringt eine Zeitersparnis mit sich. Problematisch könnte jedoch eine Beeinträchtigung der Messung des Höhenprofils durch das mit geringem Abstand erfolgende Durchtrennen der Funktionsschicht sein.

Wie zuvor angedeutet worden ist, ist es möglich, dass auf dem Träger bzw. direkt auf einer Trägeroberseite, insbesondere wenn dies ein Metall ist, und direkt unter der Funktionsschicht mindestens eine Isolierschicht vorgesehen ist. Vorteilhaft sind es zwei oder drei Isolierschichten, es können aber auch noch mehr sein. Diese können besonders vorteilhaft als Dielektrikumsschichten ausgebildet sein. Dabei sollte mindestens eine Isolierschicht, insbesondere die direkt auf dem Träger angeordnete Isolierschicht, nicht durchtrennt bzw. nicht beschädigt werden von dem Trenn-Laser. So kann die auf alle Fälle sehr wichtige Isolierfunktion erhalten werden, die vor allem für eine vorgenannte Hochspannungsprüfung bedeutsam ist.

Arbeitsparameter für den Trenn-Laser können ausgewählt werden aus der Gruppe Fortschrittsgeschwindigkeit, Pulsfrequenz, Pulsleistung, Pulsdauer und Fokustiefe bzw. Brennpunkttiefe. Damit können Leistung und vor allem Tiefe des Einbringens der Leistung in die Funktionsschicht eingestellt werden. Dies ist dem Fachmann aber grundsätzlich bekannt für Verfahrensschritte wie das beschriebene Durchtrennen einer Funktionsschicht, insbesondere einer Widerstandsschicht für ein Dickschicht-Heizelement.

Schichtparameter der Funktionsschicht können ausgewählt sein aus der Gruppe Dicke, Material und Reflektivität bzw. Absorptionsvermögen der Schicht. Damit kann die Funktionsschicht charakterisiert werden, insbesondere können damit die vorgenannten Arbeitsparameter besser bestimmt werden.

In weiterer Ausgestaltung der Erfindung kann die Funktionsschicht auf dem Bauteil streifenförmig sein mit einer gewissen Längsrichtung. Das gesamte Bauteil kann entsprechend streifenförmig oder rechteckig ausgebildet sein. Die genannte Längsrichtung verläuft vorteilhaft quer zu einer Richtung zwischen zwei elektrischen Anschlüssen, um so ein Heizelement zu bilden, wenn die Funktionsschicht eine Widerstandsschicht bzw. eine Heizschicht ist. Der Trenn-Laser kann dann quer zu dieser Längsrichtung die Funktionsschicht durchtrennen bzw. vollständig durchtrennen. Dabei kann vorgesehen sein, dass bei Durchtrennen der Funktionsschicht auch Kontaktbahnen oder Kontaktfelder durchtrennt werden, die die elektrischen Anschlüsse an das Heizelement bilden. Somit können, ähnlich wie aus der vorgenannten DE 102016211081 A1 bekannt, auch solche Kontaktbahnen oder Kontaktfelder durchtrennt werden. Diese bestehen in aller Regel aus einem anderen Material als das Heizelement, insbesondere mit deutlich höherem Metall-Anteil, vorzugsweise Silber, so dass auch der Trenn-Laser anders arbeiten muss. Die genaue Lage dieser Kontaktbahnen oder Kontaktfelder kann dann aber ebenfalls mittels des Höhenprofils erfasst werden, alternativ können sie einer Steuerung für den trenn-Laser bekannt sein. So werden auch hier möglichst nur diese Kontaktbahnen oder Kontaktfelder durchtrennt um eine Beschädigung von darunterliegenden Isolierschichten, insbesondere auch des Trägers, nach Möglichkeit zu vermeiden.

In alternativer Ausgestaltung der Erfindung ist es möglich, dass der Trenn-Laser von einem Rand einer Funktionsschicht her in zwei parallelen und voneinander beabstandeten Linien die Funktionsschicht durchtrennt. Diese beiden Linien können gleich lang sein. Sie können noch durch eine dritte Linie miteinander verbunden sein derart, dass so eine rechteckige Fläche aus der Funktionsschicht sozusagen herausgetrennt wird. So kann ebenfalls ein Abgleich einer Funktionsschicht, insbesondere einer Widerstandsschicht, erfolgen, wobei dabei vorteilhaft nur Material der Funktionsschicht entfernt wird bzw. nur die Funktionsschicht durchtrennt wird, nicht aber vorgenannte elektrische Anschlüsse odgl..

In vorteilhafter Ausgestaltung der Erfindung ist der Träger eben und somit auch die Funktionsschicht weitgehend eben. Alternativ kann ein Träger auch gebogen oder gewölbt sein, wobei dessen Geometrie der Steuerung für den Trenn-Laser genau bekannt sein muss. Nur so ist dann anhand des ermittelten Höhenprofils eine exakte Durchtrennung nur der Funktionsschicht bzw. der Funktionsschicht und möglicherweise auch einer oder mehrerer darunterliegender Isolierschichten möglich.

Die Unterteilung der Anmeldung in einzelne Abschnitte sowie Zwischen-Überschriften beschränkt die unter diesen gemachten Aussagen nicht in ihrer Allgemeingültigkeit.

### KURZBESCHREIBUNG DER ZEICHNUNGEN

Ausführungsbeispiele der Erfindung sind in den Zeichnungen schematisch dargestellt und werden im Folgenden näher erläutert. In den Zeichnungen zeigen:
- Fig. 1: eine Draufsicht auf eine Heizeinrichtung als erfindungsgemäßes Bauteil mit unterschiedlichen Strukturierungsmöglichkeiten,
- Fig. 2: eine Darstellung eines möglichen erfindungsgemäßen Verfahrens in Seitenansicht zum Durchtrennen eines Heizelements der Heizeinrichtung aus Fig. 1 und
- Fig. 3: ein alternatives erfindungsgemäßes Verfahren als Abwandlung zu der Fig. 2.

### DETAILLIERTE BESCHREIBUNG DER AUSFÜHRUNGSBEISPIELE

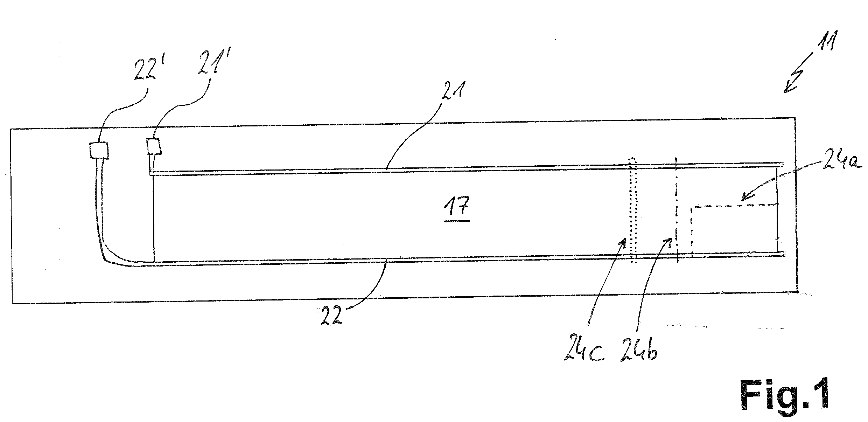

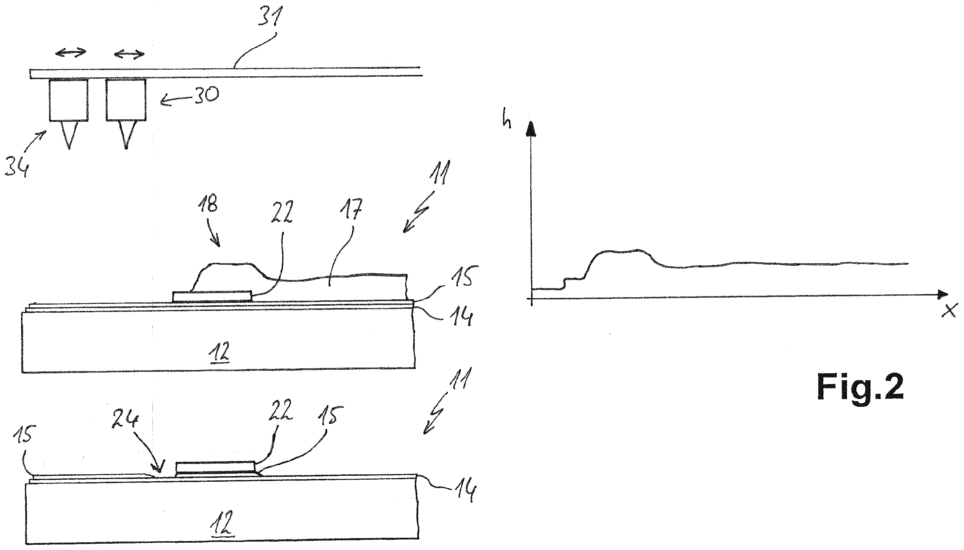

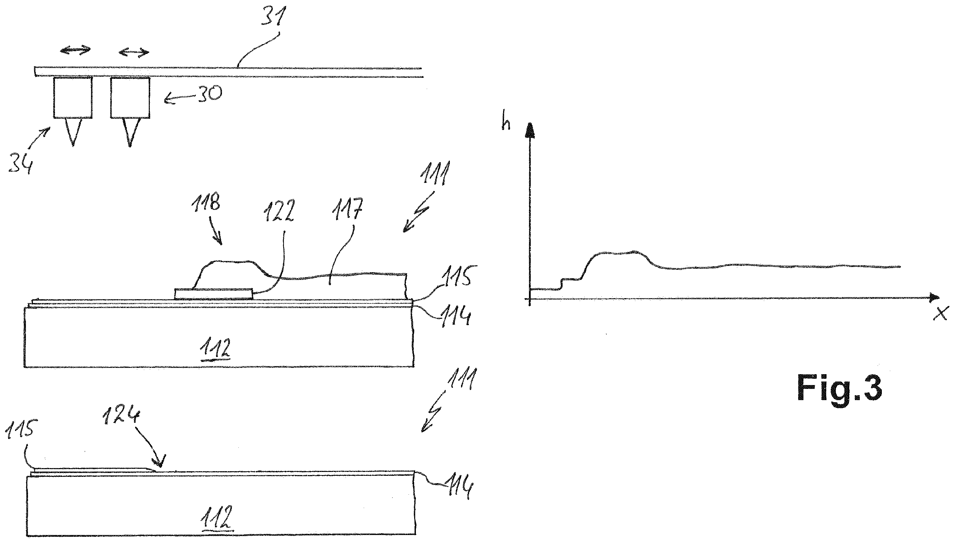

In der Fig. 1 ist in Draufsicht eine erfindungsgemäße Heizeinrichtung 11 als zuvor beschriebenes elektrisches Bauteil dargestellt, welche erfindungsgemäß behandelt worden ist bzw. bearbeitet worden ist. Die Heizeinrichtung 11 ist eine sogenannte Dickschicht-Heizeinrichtung und weist einen Träger 12 auf, vorteilhaft aus Metall. Wie die vergrößerten seitlichen Schnittdarstellungen der Fig. 2 und 3 zeigen, weist der Träger 12 auf seiner Oberseite eine erste Dielektrikumsschicht 14 auf, die ihn nahezu vollflächig oder sogar ganz vollflächig bedeckt. Darauf ist eine zweite Dielektrikumsschicht 15 aufgebracht mit im Wesentlichen derselben oder nahezu derselben Überdeckung. Die Dielektrikumsschichten 14 und 15 dienen als Isolationsschichten zur elektrischen Isolierung des metallischen und somit elektrisch leitfähigen Trägers 12. Sie können auch noch für weitere Funktionen ausgelegt sein, wie beispielsweise eine Temperaturerfassung über eine Leckstrommessung odgl.. Dies spielt für die vorliegende Erfindung aber keine Rolle. Zwei Dielektrikumsschichten 14 und 15 sind vorgesehen für eine sichere elektrische Isolierung des Trägers 12, vor allem wenn, wie nachfolgend erläutert wird, eine Dielektrikumsschicht möglicherweise beschädigt oder zumindest teilweise bis auf eine darunterliegende Oberfläche entfernt wird. Es können grundsätzlich auch nur eine sein oder auch mehr, ggf. auch drei bis fünf.

Auf dem Träger 12 bzw. oben auf der oberen zweiten Dielektrikumsschicht 15 ist ein Heizelement 17 als eingangs genannte Funktionsschicht angeordnet. Es ist breit und flächig, genauso gut könnte es auch langgestreckt sein. Es ist als übliches Dickschicht-Heizelement aus einem entsprechenden Pastenmaterial als Dickschicht gebildet, insbesondere mittels Siebdruck aufgetragen und eingebrannt, was hier aber nicht näher erläutert wird. Das Heizelement 17 überlappt zu seinen Seiten hin auf eine erste Kontaktbahn 21 und auf eine zweite Kontaktbahn 22. Die erste Kontaktbahn 21 weist ein Kontaktfeld 21' auf. Ebenso weist die zweite Kontaktbahn 22 ein zweites Kontaktfeld 22' auf. Hier können Anschlussleiter odgl. angebracht werden, insbesondere angeschweißt werden.

Wie die Schnittdarstellung der Fig. 2 zeigt, ist in einem Bereich des Heizelements 17 eine Art Erhöhung 18 vorgesehen, die dadurch kommt, dass das Heizelement 17 zu seinen Seiten hin eine erste Kontaktbahn 21 und eine zweite Kontaktbahn 22 überlappt. Es kann die Kontaktbahnen 21 und 22 teilweise überlappen, wie hier dargestellt, oder auch vollständig, wobei für eine gute elektrische Kontaktierung ein weitgehendes Überlappen mit Aufliegen ausreicht. Es muss nicht unbedingt darüber hinausgehen, dies würde auch nichts bringen für eine Heizfunktion.

Für einen elektrischen Abgleich des Heizelements 17 der Heizeinrichtung 11 können auf an sich bekannte Art und Weise Durchtrennungen vorgenommen werden. Diese werden im vorliegenden Fall besonders vorteilhaft mit einem Laser bzw. einem Trenn-Laser durchgeführt, so dass sich eine Art Laserspur bildet. Vor einer Durchtrennung wird der elektrische Widerstand des Heizelements 17 im fertigen Zustand, also nach Einbrennen einer Dickschichtpaste, erfasst. Daraus kann dann bestimmt werden, auf welchen exakten Widerstandswert sozusagen abgestimmt werden soll, wobei je nach gewünschter Art von Durchtrennung unterschiedlich vorgegangen wird.

Bei der Laserspur 24a als erste Möglichkeit einer Durchtrennung, die gestrichelt dargestellt ist, wird sozusagen parallel zu den Kontaktbahnen 21 und 22 das Heizelement 17 vollkommen durchtrennt. Somit ist hier kein Stromfluss möglich und der Widerstandswert kann, ausgehend von einem bewusst zu niedrig gewählten Widerstand, um ein gewünschtes Maß erhöht werden. Neben dem parallelen Abschnitt ist die Laserspur 24a noch nach unten geführt und sollte auch die untere zweite Kontaktbahn 22 durchtrennen, alternativ die obere. So ist die Durchtrennung sicherer bzw. so wird sehr sicher erreicht, dass das rechteckige Feld nicht mehr an der Heizfunktion teilnimmt. Mit der Laserspur 24a muss also das reine Heizelement 17 auf den Dielektrikumsschichten 14 und 15 des Trägers 12 durchtrennt werden, zusätzlich aber auch einmal die Kontaktbahn 22.

Bei der strichpunktiert dargestellten Laserspur 24b als zweite Möglichkeit einer Durchtrennung wird ein Bereich des Heizelements 17 samt beiden Kontaktbahnen 21 und 22 durchtrennt und somit vom restlichen Heizelement abgetrennt. So kann ausgehend von einem niedrigeren Widerstandswert exakt auf einen gewünschten höheren Widerstandswert abgestimmt werden. Auch hier müssen nicht nur das Heizelement 17 bzw. die entsprechende Dickschicht durchtrennt werden, sondern beide Kontaktbahnen 21 und 22.

Bei der punktiert dargestellten Laserspur 24c als dritte Möglichkeit einer Durchtrennung werden sozusagen zwei Laserspuren entsprechend der Laserspur 24b parallel zueinander und mit geringem Abstand erzeugt, die im oberen Bereich eine Umkehrung haben, wobei diese auch weggelassen werden kann. Durch diese doppelte Durchtrennung mit geringem Abstand wird auf alle Fälle eine sichere Durchtrennung erreicht und es wird ausgeschlossen, dass sich an einer Stelle der Durchtrennung, insbesondere an einer der Kontaktbahnen 21 oder 22, wieder elektrisch leitfähiges Material ansammelt und doch wieder eine Heizfunktion bewirkt.

Die wichtigste Durchtrennung bei den Laserspuren 24b und 24c ist eigentlich diejenige der Kontaktbahnen 21 und 22. Wenn das Heizelement 17 möglicherweise nicht vollständig durchtrennt wird bzw. entlang der Laserspur abgetragen wird, so wächst sein elektrischer Widerstand in diesem Bereich derart stark an, dass ohnehin kein Stromfluss in den eigentlich abzutrennenden Bereich erfolgt. Anders wäre dies eben, wenn noch ein Teil der Kontaktbahnen bestehen bleibt, da diese aufgrund ihrer sehr guten elektrischen Leitfähigkeit dann immer noch bewirkten könnten, dass die eigentlich abgetrennten Bereiche des Heizelements 17 die Heizfunktion ausüben.

Wie zuvor erläutert worden ist, soll also mindestens das Heizelement 17 durchtrennt werden, vorteilhaft und in den meisten Fällen auch mindestens einmal eine der Kontaktbahnen 21 oder 22. Die seitliche Schnittdarstellung der Fig. 2 zeigt, dass dies zumindest im Bereich der Kontaktbahnen, hier dargestellt mit der Kontaktbahn 22, nicht trivial ist. Die dort entstehende Erhöhung 18 durch Überlappen des Heizelements 17 erschwert dies nämlich. Des Weiteren ist das Material der Kontaktbahnen üblicherweise erheblicher schwerer zu entfernen als dasjenige des Heizelements 17. Es weist einen höheren Metallanteil auf und somit in der Regel sowohl einen höheren Schmelzpunkt als auch eine höhere Reflektivität, was die Einkopplung der Energie eines Trenn-Lasers wiederum schwieriger macht.

Oberhalb der Heizeinrichtung 11 ist ein Mess-Laser 30 an einer Schiene 31 längs dieser verfahrbar angebracht. Er kann entsprechend der gewünschten Laserspur an der Schiene 31 verfahren werden. Über entsprechende Aufhängungssysteme kann die Schiene 31 selbst wiederum in einer Richtung senkrecht zur Zeichenebene verfahren werden, so dass auch die Laserspuren 24a und 24c gemäß Fig. 1 ausgemessen bzw. erfasst werden können und nachher durchtrennt werden können.

Der Mess-Laser 30 fährt also links beginnend nach rechts, was in dem rechts dargestellten x-h-Diagramm dem Weg x entspricht. Auf bekannte Art und Weise tastet er sozusagen die Oberfläche oder Höhe der Heizeinrichtung 11 ab und erstellt ein Profil der Höhe h über dem Weg x, wie es rechts in der Fig. 2 dargestellt ist. Die Höhe h ist dabei auf Oberseite des Trägers 12 bezogen. Dieses Höhenprofil aus dem Diagramm rechts in Fig. 2 wird in eine Steuerung für einen Trenn-Laser 34 gegeben, der ebenfalls über der Heizeinrichtung 11 vorgesehen ist, vorteilhaft an derselben Schiene 31 wie der Mess-Laser 30 angebracht und ebenso verfahrbar. So weiß die Steuerung für den Trenn-Laser, wieviel Material, vor allem des Heizelements 17, bzw. mit welcher Höhe vorhanden ist und somit entfernt werden muss. Damit können die Leistungsparameter des Trenn-Lasers 34 auf eingangs beschriebene Art und Weise eingestellt werden, insbesondere die Wiederholfrequenz. Des Weiteren ist diese Steuerung genau einprogrammiert, wo an der Heizeinrichtung 11 die zu durchtrennenden Kontaktbahnen 21 und 22 vorgesehen sind. Dies lediglich aus der Erhöhung 18 herauszulesen ist zwar grundsätzlich möglich, ist aber mit zu viel Unsicherheit behaftet. Dennoch ist Lage und Art der Erhöhung 18 als Information wichtig für den Betrieb des Trenn-Lasers.

Bei dem Höhenprofil kann vorgesehen sein, dass als eine Art Null-Ebene die Ebene des Trägers bzw. dessen Oberseite genommen wird. Alternativ kann die Ebene einer der Dielektrikumsschichten 14 oder 15 genommen werden, also jeweils deren Oberseite. Dabei ist dann fraglich, ob in diese Null-Ebene hinein Material abgetragen werden kann bzw. der Trenn-Laser Material beschädigt. Dies kann aber eingestellt werden, siehe die nachfolgenden Beispiele. Es muss also nicht zwingend vorgesehen sein, dass bis auf die Null-Ebene mit h = 0 jegliches Material abgetragen wird von dem Trenn-Laser.

Links unten in der Fig. 2 ist dargestellt, wie die Heizeinrichtung 11 von der Seite aussieht in der Ebene, in der die Laserspur 24 erzeugt worden ist. Bei der hier dargestellten Variante ist das Heizelement 17 entlang der Laserspur 24 vollständig entfernt, also sein Material entfernt über eine Breite von beispielsweise 0,1 mm. Dies gilt auch für die obere zweite Dielektrikumsschicht 15. Die zweite Kontaktbahn 22 ist unter Umständen zum Teil an der Oberseite beschädigt bzw. entfernt worden, aber auf alle Fälle nicht vollständig. Dies ist möglich für die Laserspur 24a gemäß Fig. 1, dort ist eine noch teilweise leitende Kontaktbahn 22 hinter der Laserspur 24 nicht schädlich.

Aus der Fig. 2 ist auch erkennbar, dass das Höhenprofil der Höhe h des Heizelements 17 deswegen von Vorteil ist, weil die Höhe h des Schichtaufbaus auf dem als eben anzusehenden Träger 12 eben nicht konstant ist. Die Dicke des Trägers 12 kann konstant sein, so dass seine Oberseite als vollständig eben angesehen werden kann. Die beiden Dielektrikumsschichten 14 und 15 können so dünn sein, dass die Oberseite der zweiten Dielektrikumsschicht 15 auch noch im Prinzip vollständig eben ist. Aufgrund der größeren Dicke trifft dies für das Heizelement 17 nicht mehr unbedingt zu. Auch die Aufbringung durch ein Siebdruckverfahren kann eine Dickenvariation von immerhin wenigen Prozent bewirken.

Mit der Information des Höhenprofils sowie der exakten Lageinformation für die zweite Kontaktbahn 22 kann der Trenn-Laser 34 jedenfalls die in der Fig. 2 links unten dargestellte Laserspur 24 erzeugen mit eine eingestellten Breite und vor allem einer Tiefe entsprechend der Vorgaben und dem zuvor erfassten Höhenprofil. Die untere erste Dielektrikumsschicht 14 bleibt hier gemäß Vorgabe unversehrt, was als wichtig angesehen wird. Schließlich stellt sie sozusagen die letzte elektrische Isolierung des elektrisch leitfähigen Trägers 12 nach oben dar. Die zweite Kontaktbahn 22 bleibt auch weitgehend unversehrt.

In der Fig. 3 soll in Anlehnung an die Darstellung der Fig. 2 eine Laserspur 24b oder 24c als Durchtrennung erzeugt werden. Der Mess-Laser 30 an der Schiene 31 samt Trenn-Laser 34 entspricht der Fig. 2, die Heizeinrichtung 111 im Prinzip auch. Zuerst wird wieder das Höhenprofil h über dem Weg x aufgenommen, wobei auch hier die Erhöhung 118 in diesem Höhenprofil erkennbar ist entsprechend Fig. 2. Die genaue Lage der zweiten Kontaktbahn 122 ist in der Steuerung wiederum bekannt für diese Heizeinrichtung 111 und kann für den Trenn-Laser 34 entsprechend berücksichtigt werden. Schließlich soll hier mit der Laserspur 124 die zweite Kontaktbahn 122 durchtrennt werden. Während der Trenn-Laser 34 also noch bei der Fig. 2 mit nicht allzu großer Variation in der Leistung gearbeitet hat, muss es nun im Bereich der zweiten Kontaktbahn 122 mit erheblich höherer Leistung arbeiten, um diese durchtrennen zu können. Schließlich soll auch hier maximal die obere zweite Dielektrikumsschicht 115 entfernt werden entlang der Laserspur 124. Die untere erste Dielektrikumsschicht 114 sollte aber nicht entfernt oder zerstört oder beeinträchtigt werden, um die Isolationswirkung aufrecht zu erhalten. Gerade durch das Entfernen der zweiten Kontaktbahn 122 beim Durchtrennen, wodurch sozusagen fliegende kleine Metallpartikel entstehen könnten, die dann auf sehr störende Art und Weise entweder wieder eine elektrisch leitfähige Verbindung zwischen den an sich durchtrennten Enden der Kontaktbahn erzeugen könnten, oder aber zum Träger 112 direkt. Dies würde einen störenden oder sogar schädlichen Kurzschluss bewirken.

## Patentansprüche

1. Verfahren zum Bearbeiten eines elektrischen Bauteils mit Schichtaufbau, insbesondere einer Heizeinrichtung (11, 111) mit einem Dickschicht-Heizelement, wobei auf einen Träger (12, 112) mindestens eine Funktionsschicht (17, 117) aufgebracht ist, wobei diese Funktionsschicht mittels eines Trenn-Lasers (34) vollständig durchtrennt werden soll, mit folgenden Schritten:
- es wird an der Stelle, an der die Durchtrennung der Funktionsschicht (17, 117) erfolgen soll, ein Höhenprofil der Funktionsschicht über der Ebene des Trägers (12, 112) erstellt,
- die Information des Höhenprofils der Funktionsschicht (17, 117) wird an eine Steuerung für einen Trenn-Laser (34) gegeben,
- der Trenn-Laser (34) wird unter Verwendung von bekannten Schichtparametern der Funktionsschicht (17, 117) so eingestellt, dass er dem Höhenprofil angepasst die Funktionsschicht vollständig durchtrennt.

2. Verfahren nach Anspruch 1, **dadurch gekennzeichnet, dass** der Trenn-Laser (34) nur die Funktionsschicht (17, 117) durchtrennt und keine darunterliegende Schicht bzw. nicht den darunterliegenden Träger (12, 112), wobei insbesondere der Trenn-Laser (34) den darunterliegenden Träger (12, 112) bzw. das Trägermaterial nicht beschädigt.

3. Verfahren nach Anspruch 1, **dadurch gekennzeichnet, dass** der Trenn-Laser (34) die Funktionsschicht (17, 117) vollständig durchtrennt und zusätzlich 1 µm bis 100 µm, vorzugsweise 5 µm bis 20 µm, tief in eine darunterliegende Schicht bzw. in den darunterliegenden Träger (12, 112) hinein Material entfernt.

4. Verfahren nach einem der vorhergehenden Ansprüche, **dadurch gekennzeichnet, dass** das Höhenprofil der Funktionsschicht (17, 117) über der Ebene des Trägers (12, 112) mittels eines Mess-Lasers (30) erstellt wird.

5. Verfahren nach einem der vorhergehenden Ansprüche, **dadurch gekennzeichnet, dass** das Höhenprofil als Weg-Höhe-Diagramm aufgenommen wird.

6. Verfahren nach einem der vorhergehenden Ansprüche, **dadurch gekennzeichnet, dass** das Höhenprofil entlang der späteren Trennlinie durch die Funktionsschicht (17, 117) zuerst vollständig aufgenommen wird bevor das Durchtrennen der Funktionsschicht beginnt.

7. Verfahren nach einem der vorhergehenden Ansprüche, **dadurch gekennzeichnet, dass** auf dem Träger (12, 112) und unter der Funktionsschicht (17, 117) mindestens eine Isolierschicht (14, 15, 114, 115) vorgesehen ist, vorzugsweise zwei oder drei Isolierschichten, insbesondere als Dielektrikumsschichten.

8. Verfahren nach Anspruch 7, abhängig von einem der Ansprüchen 1 oder 3 bis 6, **dadurch gekennzeichnet, dass** mindestens eine Isolierschicht (14, 15, 114, 115) auf dem Träger (12, 112) mit dem Trenn-Laser (34) nicht durchtrennt wird bzw. nicht beschädigt wird.

9. Verfahren nach einem der vorhergehenden Ansprüche, **dadurch gekennzeichnet, dass** Arbeitsparameter für den Trenn-Laser (34) ausgewählt sind aus der folgenden Gruppe: Fortschrittsgeschwindigkeit, Pulsfrequenz, Pulsleistung, Pulsdauer, Fokustiefe bzw. Brennpunkttiefe.

10. Verfahren nach einem der vorhergehenden Ansprüche, **dadurch gekennzeichnet, dass** Schichtparameter der Funktionsschicht (17, 117) ausgewählt sind aus der folgenden Gruppe: Dicke, Material, Reflektivität bzw. Absorptionsvermögen.

11. Verfahren nach einem der vorhergehenden Ansprüche, **dadurch gekennzeichnet, dass** die Funktionsschicht (17, 117) streifenförmig ist mit einer Längsrichtung, insbesondere einer Längsrichtung quer zu einer Richtung zwischen zwei elektrischen Anschlüssen (21, 22, 122) als ein Heizelement bei einer Funktionsschicht aus Heizelementmaterial, wobei der Trenn-Laser (34) quer zu dieser Längsrichtung die Funktionsschicht durchtrennt, insbesondere die Funktionsschicht vollständig durchtrennt.

12. Verfahren nach Anspruch 11, **dadurch gekennzeichnet, dass** beim Durchtrennen der Funktionsschicht (17, 117) quer zur Längsrichtung des Heizelements auch Kontaktbahnen (21, 22, 122) oder Kontaktfelder als elektrische Anschlüsse an das Heizelement durchtrennt werden.

13. Verfahren nach einem der vorhergehenden Ansprüche, **dadurch gekennzeichnet, dass** der Trenn-Laser (34) von einem Rand der Funktionsschicht (17, 117) her in zwei parallelen und voneinander beabstandeten Linien die Funktionsschicht durchtrennt, wobei vorzugsweise die beiden Linien gleich lang sind und durch eine dritte Linie miteinander verbunden sind derart, dass eine rechteckige Fläche aus der Funktionsschicht herausgetrennt wird.

14. Verfahren nach einem der vorhergehenden Ansprüche, **dadurch gekennzeichnet, dass** der Träger (12, 112) eben ist.

## Claims

1. Method for processing an electrical component having a layer structure, in particular a heating device (11, 111) comprising a thick-film heating element, wherein at least one functional layer (17, 117) is applied on to a carrier (12, 112), wherein said functional layer is intended to be completely severed by means of a separating laser (34), comprising the following steps:
- a height profile of the functional layer (17, 117) above the plane of the carrier (12, 112) is generated at the location at which the functional layer is intended to be severed,
- the information of the height profile of the functional layer (17, 117) is passed to a controller for a separating laser (34),
- the separating laser (34) is set using known layer parameters of the functional layer (17, 117) such that said separating laser completely severs the functional layer in a manner adapted to the height profile.

2. Method according to Claim 1, **characterized in that** the separating laser (34) severs only the functional layer (17, 117) and no underlying layer or not the underlying carrier (12, 112), wherein in particular the separating laser (34) does not damage the underlying carrier (12, 112) or the carrier material.

3. Method according to Claim 1, **characterized in that** the separating laser (34) completely severs the functional layer (17, 117) and additionally removes material to a depth of 1 µm to 100 µm, preferably 5 µm to 20 µm, into an underlying layer or into the underlying carrier (12, 112).

4. Method according to any of the preceding claims, **characterized in that** the height profile of the functional layer (17, 117) above the plane of the carrier (12, 112) is generated by means of a measuring laser (30).

5. Method according to any of the preceding claims, **characterized in that** the height profile is recorded as a displacement-height diagram.

6. Method according to any of the preceding claims, **characterized in that** the height profile along the later separating line through the functional layer (17, 117) is firstly recorded completely before the severing of the functional layer begins.

7. Method according to any of the preceding claims, **characterized in that** at least one insulating layer (14, 15, 114, 115) is provided on the carrier (12, 112) and below the functional layer (17, 117), preferably two or three insulating layers, in particular as dielectric layers.

8. Method according to Claim 7, depending on any of claims 1 or 3 to 6, **characterized in that** at least one insulating layer (14, 15, 114, 115) on the carrier (12, 112) is not severed or not damaged by the separating laser (34).

9. Method according to any of the preceding claims, **characterized in that** operating parameters for the separating laser (34) are selected from the following group: speed of advance, pulse frequency, pulse power, pulse duration, depth of focus or focal point depth.

10. Method according to any of the preceding claims, **characterized in that** layer parameters of the functional layer (17, 117) are selected from the following group: thickness, material, reflectivity and/or absorptivity.

11. Method according to any of the preceding claims, **characterized in that** the functional layer (17, 117) is strip-shaped with a longitudinal direction, in particular a longitudinal direction transversely with respect to a direction between two electrical connections (21, 22, 122) as a heating element in the case of a functional layer comprising heating element material, wherein the separating laser (34) severs the functional layer, in particular completely severs the functional layer, transversely with respect to said longitudinal direction.

12. Method according to Claim 11, **characterized in that** contact paths (21, 22, 122) or contact zones as electrical connections to the heating element are also severed during the severing of the functional layer (17, 117) transversely with respect to the longitudinal direction of the heating element.

13. Method according to any of the preceding claims, **characterized in that** the separating laser (34) severs the functional layer (17, 117) from an edge of the functional layer in two parallel lines spaced apart from one another, wherein preferably the two lines are of equal length and are connected to one another by a third line in such a way that a rectangular area is separated out of the functional layer.

14. Method according to any of the preceding claims, **characterized in that** the carrier (12, 112) is planar.

## Revendications

1. Procédé de traitement d'un composant électrique à structure en couche, en particulier un dispositif de chauffage (11, 111) comprenant un élément de chauffage à couche épaisse, dans lequel sur un support (12, 112) au moins une couche fonctionnelle (17, 117) est appliquée, dans lequel ladite couche fonctionnelle doit être découpée complètement au moyen d'un laser de séparation (34), comprenant les étapes suivantes :
- à l'endroit où la découpe de la couche fonctionnelle (17, 117) doit avoir lieu un profil de hauteur de la couche fonctionnelle au-dessus du plan du support (12, 112) est établi,
- l'information du profil de hauteur de la couche fonctionnelle (17, 117) est donnée à une commande pour un laser de séparation (34),
- le laser de séparation (34) est ajusté à l'aide de paramètres de couche connus de la couche fonctionnelle (17, 117) de telle manière que le laser découpe complètement la couche fonctionnelle adapté au profil de hauteur.

2. Procédé selon la revendication 1, **caractérisé en ce que** le laser de séparation (34) découpe seulement la couche fonctionnelle (17, 117) et ne découpe pas une couche sous-jacente ou bien ne découpe pas le support (12, 112) sous-jacent, dans lequel en particulier le laser de séparation (34) n'endommage pas le support (12, 112) sous-jacent ou le matériau du support.

3. Procédé selon la revendication 1, **caractérisé en ce que** le laser de séparation (34) découpe la couche fonctionnelle (17, 117) complètement et en outre enlève matière dans une couche sous-jacente ou bien dans le support (12, 112) sous-jacent, à une profondeur de 1 µm à 100 µm, de préférence 5 µm à 20 µm.

4. Procédé selon l'une des revendications précédentes, **caractérisé en ce que** le profil de hauteur de la couche fonctionnelle (17, 117) est établi au-dessus du plan du support (12, 112) au moyen d'un laser de mesure (30).

5. Procédé selon l'une des revendications précédentes, **caractérisé en ce que** le profil de hauteur est enregistré sous forme de diagramme trajectoire-hauteur.

6. Procédé selon l'une des revendications précédentes, **caractérisé en ce que** le profil de hauteur le long de la ligne de séparation ultérieure au travers de la couche fonctionnelle (17, 117) est tout d'abord enregistré complètement avant que la découpe de la couche fonctionnelle commence.

7. Procédé selon l'une des revendications précédentes, **caractérisé en ce que** sur le support (12, 112) et en-dessous de la couche fonctionnelle (17, 117) au moins une couche isolante (14, 15, 114, 115) est prévue, de préférence deux ou trois couches isolantes, en particulier sous forme de couches diélectriques.

8. Procédé selon la revendication 7, dépendante de l'une des revendications 1 ou 3 à 6, **caractérisé en ce qu'**au moins une couche isolante (14, 15, 114, 115) sur le support (12, 112) n'est pas découpée ou bien n'est pas endommagée par le laser de séparation (34).

9. Procédé selon l'une des revendications précédentes, **caractérisé en ce que** des paramètres de fonctionnement pour le laser de séparation (34) sont choisis parmi le groupe comprenant : vélocité de progrès, fréquence des impulsions, puissance des impulsions, durée des impulsions, profondeur de champ ou profondeur de foyer.

10. Procédé selon l'une des revendications précédentes, **caractérisé en ce que** des paramètres de couche de la couche fonctionnelle (17, 117) sont choisis parmi le groupe comprenant : épaisseur, matériau, réflectivité ou capacité d'absorption.

11. Procédé selon l'une des revendications précédentes, **caractérisé en ce que** la couche fonctionnelle (17, 117) est sous forme de bandes avec une direction longitudinale, en particulier une direction longitudinale transversalement par rapport à une direction entre deux connexions électriques (21, 22, 122) en tant qu'un élément de chauffage en cas d'une couche fonctionnelle en matériau d'élément de chauffage, dans lequel le laser de séparation (34) découpe la couche fonctionnelle transversalement par rapport à ladite direction longitudinale, en particulier découpe la couche fonctionnelle complètement.

12. Procédé selon la revendication 11, **caractérisé en ce que** lors de la découpe de la couche fonctionnelle (17, 117) transversalement par rapport à la direction longitudinale de l'élément de chauffage aussi des pistes de contact (21, 22, 122) ou champs de contact en tant que connexions électriques à l'élément de chauffage sont découpées.

13. Procédé selon l'une des revendications précédentes, **caractérisé en ce que** le laser de séparation (34) à partir d'un bord de la couche fonctionnelle (17, 117) découpe la couche fonctionnelle en deux lignes parallèles et espacées l'une de l'autre, dans lequel de préférence les deux lignes sont de même longueur et reliées l'une à l'autre par une troisième ligne de telle manière qu'une surface rectangulaire est séparée de la couche fonctionnelle.

14. Procédé selon l'une des revendications précédentes, **caractérisé en ce que** le support (12, 112) est sous forme plate.
